# EUROPEAN PATENT SPECIFICATION

(11) **EP 0 480 960 B1**
(45) Date of publication and mention of the grant of the patent: **01.03.1995**
(21) Application number: 90909734.7
(22) Date of filing: 28.06.1990
(51) Int. Cl.: C04B 2/10, F27B 7/32

(54) **FEEDING SYSTEM FOR A LIME REBURNING KILN**
ZUFÜHRSYSTEM FÜR KALK-RECALCINIERUNGSOFEN
SYSTEME D'ALIMENTATION POUR FOUR DE RECUISSON DE LA CHAUX

(30) Priority: 03.07.1989 FI 893224
(43) Date of publication of application: 22.04.1992
(73) Proprietor: A. AHLSTROM CORPORATION, 29600 Noormarkku (FI)
(72) Inventor: AHVENAINEN, Arto, SF-78400 Varkaus (FI)
(74) Representative: Füchsle, Klaus, Dipl.-Ing.
(86) International application number: FI9000172
(87) International publication number: WO9100251

(56) References cited:
- EP-A-03 696 50
- DE-A- 3 425 099
- FR-A- 1 238 562
- GB-A- 1 451 057
- SE-A-90 002 684
- SE-C- 184 846
- US-A- 2 796 249
- US-A- 3 603 569

## Description

The present invention relates to a method and apparatus for feeding lime mud into a rotary kiln in order to regenerate the lime mud, which has been separated in connection with causticizing process and is mainly CaCO₃, to form CaO in the rotary kiln.

In previously known apparatuses, lime mud is introduced in a dry solids content of 60 through 70 % into the top end of a rotary kiln, wherefrom it slowly moves downwards through drying, heating and reaction zones. To improve the heat transfer, chains are employed in the drying zone where heat is transferred from flue gases to the lime mud mainly through convection. The chains come into contact with lime mud when the kiln rotates. To obtain a good result, the heat treatment of the lime mud in the kiln has to take place slowly. For this purpose, the lime reburning kiln has to be long, consequently requiring a large space.

It has been possible to shorten a lime reburning kiln by drying and preheating the lime mud in pneumatic dryers with flue gas prior to introducing the lime mud into the lime reburning kiln.

Since it is difficult to handle wet lime mud obtained from the filter, it has been mixed with dried lime mud before introducing it into a pneumatic dryer. The equipment needed for the pretreatment of lime mud has been complex and it has required a complicated control and regulating system.

The object of the present invention is to provide a simple method and apparatus for introducing lime mud into a rotary kiln.

Finnish patent application 890376 discloses thickening of lime mud in a lime filter to a dryness of over 75%, whereby it is possible to introduce the lime mud directly into a pneumatic dryer without the necessity of using hammer mills or mixing screws for crushing the lumps. The lime mud is so dry that the dryer will remain open. Another point of feeding lime mud is, however, still needed for the lime reburning kiln. When the "precoat" of the lime mud filter is replaced, it is not desirable to feed the wet lump of lime mud into the pneumatic dryer because there is a risk of the dryer becoming clogged, but the lime mud is introduced directly into the lime reburning kiln by means of a separate feed screw.

In the feeding system according to the invention, the lime mud coming from the filter is fed by means of a feed screw to the same channel from which the lime mud is introduced either into a pneumatic dryer or directly into the lime reburning kiln, or both, depending on the dry solids content and particle size of the lime mud.

It is a main characteristic feature of the method according to the invention that the lime mud is fed into a upwardly moving gas flow which contains an adjustable portion of the flue gases discharged from the lime reburning kiln, that at least part of the lime mud fed into the gas flow is dried in a pneumatic dryer by means of flue gases, the possibly remaining part falling into a feeding means disposed in connection with the inlet or top end of the lime reburning kiln and that the lime mud dried in the dryer is separated from the flue gas and introduced into the lime reburning kiln.

It is a characteristic feature of the apparatus according to the invention that it comprises a feed chamber with the upper section thereof being divided by a partition wall into two adjacent, substantially vertical flow channels and connected to a substantially vertical part of a drying pipe leading to a cyclone, and with the lower section thereof encasing the feeding means disposed at the top end of the lime reburning kiln, a control baffle inserted in the upper section of the partition wall, a feed screw or equivalent for dosing lime mud into one of the adjacent flow channels of the feed chambers, and means for introducing dried lime mud which has been separated in the cyclone into the lower section of the feed chamber.

The arrangement according to the invention provides, for example, the following advantages:
- simple and inexpensive construction;
- distribution of lime mud into the dryer/kiln requires no special measures to be taken;
- the end temperature of the dryer may be adjusted by changing the ratio between the gas amounts flowing through adjacent flow channels, consequently affecting the amount of lime mud entering the pneumatic dryer;
- fluctuations of the dry solids content at the lime filter do not cause alterations to the end temperature of the dryer.

The invention is described in more detail below, by way of example, with reference to the accompanying drawings, in which
- Fig. 1: is a schematic illustration of an apparatus suitable for carrying out the method according to the invention;
- Fig. 2: is a vertical, sectional view of a feeding system for a lime reburning kiln in accordance with the invention; and
- Fig. 3: is an illustration of the feeding system in the direction of travel of arrow A.

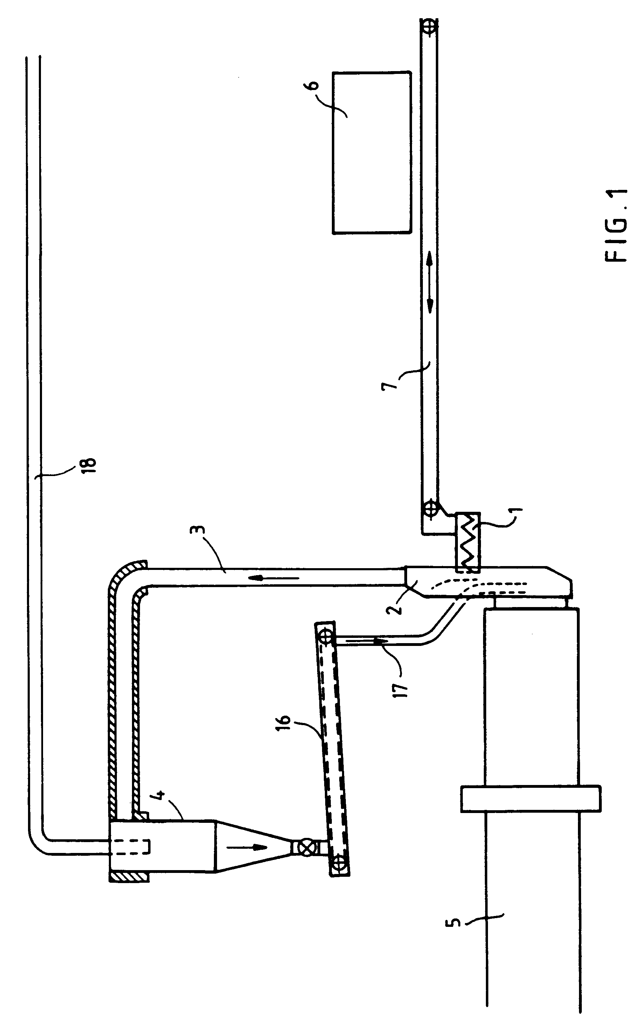

Fig. 1 shows the principle of a dryer-kiln system operating in accordance with the method of the invention. The main parts of the apparatus shown in the figure are feed screw 1, feed chamber 2, drying pipe 3, separation cyclone 4 and rotary kiln 5. Lime mud is thickened in a lime filter 6. A belt conveyor 7 disposed underneath the filter receives the lime mud coming from the filter and then drops it into the feed screw 1.

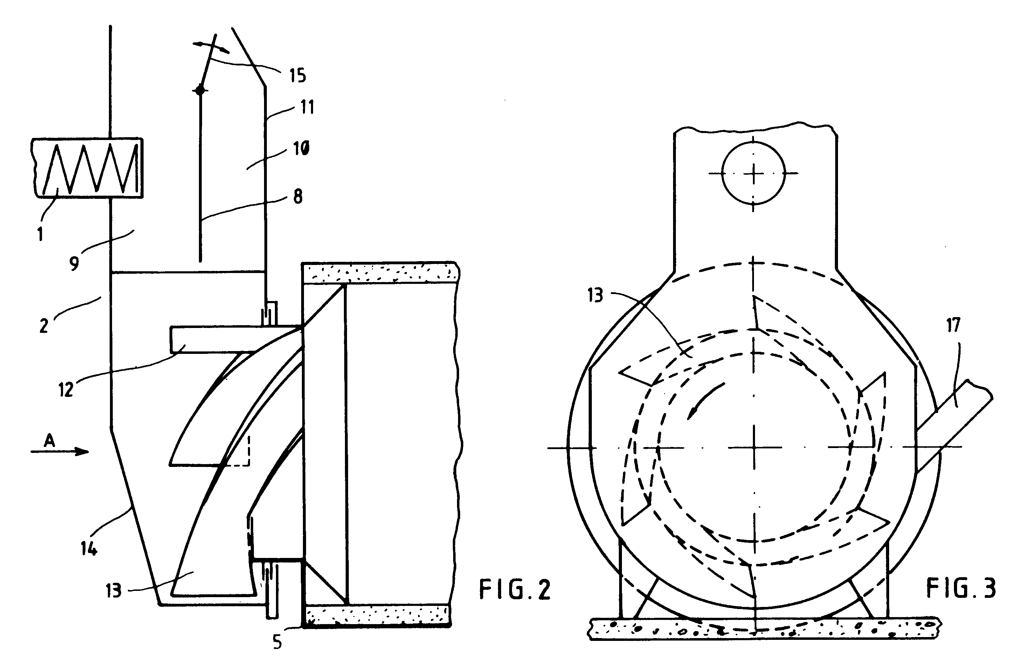

As shown in Figs 2 and 3, the feed chamber includes an upper section 11, which is divided by a partition wall 8 into two adjacent, vertical flow channels 9 and 10 and which communicates with the vertical section of the drying pipe 3, and a lower section 14 which encases feed vanes 13 with shovel-formed extensions 12, said feed vanes being attached to the upper section of the rotary kiln.

The drying pipe 3 extends vertically upwardly from the feed chamber and is thereafter bent in the horizontal direction and connected tangentially to the top end of the cyclone 4.

The feed screw 1 opens to one of the adjacent channels 9 of the feed chamber and doses the lime mud discharged from the filter thereinto. The upper section of the partition wall 8 of the feed chamber is provided with a control baffle 15 for controlling or defining how much of the flue gas discharged from the lime reburning kiln 5 flows through each flow channel 9, 10. Thereby, depending on the position of the control baffle, only part of the flue gas or the entire amount thereof flows through the flow channel 9. The amount may range, for example, from 30 to 100 %.

The coarse and wet fraction of the lime mud introduced into the feed chamber falls into the lower section of the feed chamber. When rotating, the shovels 12 disposed at the end of the feed vanes 13 lift it up and the vanes lead it further into the kiln. The lighter fraction is entrained with the flue gas into the cyclone 4 and is dried by the heat of the flue gas. The solid material is separated from the gas in the cyclone and the dried lime mud is discharged from the lower end of the cyclone. A conveyor 16, disposed underneath the cyclone, transfers the dried lime mud into a return pipe 17 leading to the lower section 14 of the feed chamber. The flue gas is removed from the cyclone via pipe 18.

Depending on the amount of flue gas flowing through the flow channel 9, i.e. on the flow rate of the gas, 100 % or less, for example, 50 % of the lime mud introduced into said flue gas is entrained with the gas into the drying pipe and dries therein.

The lime mud is introduced into the feed chamber in the dry solids content of over 75 %, preferably of 80 %, and it dries in the drying pipe by means of flue gases to a dry solids content of about 100 %.

The wet "precoat" discharged from the lime filter and introduced into the feed chamber 2 falls into the lower section of the feed chamber, wherefrom it is fed by means of vanes 13 into the lime reburning kiln.

The invention is not limited to the embodiment of the example described above, but its details may vary within the inventive scope defined by the accompanying claims.

## Claims

1. A method of introducing lime mud into a rotary kiln, **characterized** in that the lime mud is fed into an upwardly moving gas flow which contains an adjustable portion of the flue gases discharged from a lime reburning kiln, that at least part of the lime mud fed into the gas flow is dried in a penumatic dryer by means of flue gases from the lime reburning kiln, any remaining part falling into a feeding means disposed in connection with the top or inlet end of the lime reburning kiln and that the lime mud dried in the dryer is separated from the flue gas and introduced into the lime reburning kiln.

2. A method as claimed in claim 1, **characterized** in that the lime mud is fed into the gas flow in a dry solids content exceeding 75 %.

3. A method as claimed in claim 1 or 2, **characterized** in that 50 to 100 % of the lime mud fed into the gas flow is dried in a pneumatic dryer.

4. A method as claimed in claim 1, 2 or 3, **characterized** in that the adjustable gas flow contains 30 to 100 % of the flue gases discharged from the lime reburning kiln.

5. An apparatus for carrying out the method as claimed in any of the preceding claims, **characterized** in that it comprises a feed chamber (2), having upper section (11) divided by a partition wall (8) into two adjacent, substantially vertical flow channels (9, 10) and connected to a substantially vertical part of a drying pipe (3) which leads to a cyclone (4), and with the lower section (14) of said feed chamber encasing at least part of the feeding means (12, 13) disposed at the inlet or top end of the lime reburning kiln (5), a control baffle (15) disposed at an upper part of the partition wall, a feed screw (1) or equivalent feeding means for dosing lime mud into one of the adjacent flow channels (9) of the feed chamber, and means (16, 17) for introducing the dried lime mud which has been separated in the cyclone (4) into the lower section of the feed chamber.

6. An apparatus as claimed in claim 5, **characterized** in that the feeding means (12, 13) are comprised of vanes (13) having scoop means or shovel-formed extensions (12) and being attached to the inlet or top end of the lime reburning kiln, which vanes, when rotating, transfer the lime mud into the lime reburning kiln.

## Patentansprüche

1. Verfahren zur Einführung von Kaustizierkalkschlamm in einen Drehofen, dadurch **gekennzeichnet**, daß der Kaustizierkalkschlamm in einen aufwärts steigenden Gasstrom eingegeben wird, der einen verstellbaren Anteil der aus einem Kalkrückbrennungsofen abgezogenen Rauchgase enthält, daß mindestens ein Teil des in den Gasstrom eingegebenen Kaustizierkalkschlammes mittels Rauchgase aus dem Kalkrückbrennungsofen in einem pneumatischen Trockner getrocknet wird, wobei der übrigbleibende Teil in eine Eingabevorrichtung hineinfällt, die in Verbindung mit dem oberen oder dem Eintrittsende des Kalkrückbrennungsofens angeordnet ist und daß der im Trockner getrocknete Kaustizierkalkschlamm aus dem Rauchgas abgeschieden und in den Kalkrückbrennungsofen eingeführt wird.

2. Verfahren gemäß Anspruch 1, dadurch **gekennzeichnet**, daß der Kaustizierkalkschlamm mit einem Trockengehalt von über 75 % in den Gasstrom eingegeben wird.

3. Verfahren gemäß Anspruch 1 oder 2, dadurch **gekennzeichnet**, daß 50 bis 100 % des in den Gasstrom eingegebenen Kaustizierkalkschlammes in einem pneumatischen Trockner getrocknet werden.

4. Verfahren gemäß Anspruch 1, 2 oder 3, dadurch **gekennzeichnet**, daß der verstellbare Gasstrom 30 bis 100 % der aus dem Kalkrückbrennungsofen abgezogenen Rauchgase enthält.

5. Vorrichtung zur Durchführung des Verfahrens gemäß einem der obigen Ansprüche, dadurch **gekennzeichnet**, daß sie besteht aus einer Eingabekammer (2) mit einem durch eine Trennwand (8) in zwei nebeneinanderliegende hauptsächlich vertikale Strömungskanäle (9, 10) geteilten oberen Abschnitt (11), die mit einem hauptsächlich vertikalen Teil eines Trockenrohrs (3) verbunden ist, das zu einem Zyklon (4) führt, und wobei der untere Abschnitt (14) der genannten Eingabekammer mindestens einen Teil der am Eintritts- oder oberen Ende des Kalkrückbrennungsofens (5) angeordneten Eingabevorrichtung (12, 13) einschließt, einer an einem oberen Teil der Trennwand angeordneten Regelklappe (15), einer Förderschnecke (1) oder entsprechenden Zufuhrvorrichtung zur Dosierung von Kaustizierkalkschlamm in eine der nebeneinanderliegenden Strömungskanäle (9) der Eingabekammer, und Vorrichtungen (16, 17) zur Einführung des getrockneten im Zyklon (4) abgeschiedenen Kaustizierkalkschlammes in den unteren Abschnitt der Eingabekammer.

6. Vorrichtung gemäß Anspruch 5 dadurch **gekennzeichnet**, daß die Eingabevorrichtung (12, 13) aus Schaufeln (13) besteht, die Schaufelorgane oder löffelförmige Verlängerungen (12) aufweisen und am Eintritts- oder oberen Ende des Kalkrückbrennugsofens angebracht sind, welche Schaufeln beim Umlaufen den Kaustizierkalkschlamm in den Kalkrückbrennungsofen hinein befördern.

## Revendications

1. Procédé d'introduction de chaux dans un four rotatif caractérisé en ce que de la boue de chaux est introduite dans un flux gazeux circulant vers le haut qui contient une portion réglable des gaz de combustion évacués d'un four de recuisson de la chaux, en ce qu' au moins une partie de la boue de chaux délivrée dans le flux gazeux est séchée dans un sécheur pneumatique à l'aide des gaz de combustion provenant du four de recuisson de la chaux, toute partie restante tombant dans des moyens d'alimentation disposés en relation avec l'extrémité supérieure ou d'admission du four de recuisson de la chaux, et en ce que la boue de chaux séchée dans le sécheur est séparée des gaz de combustion et introduite dans le four de recuisson de la chaux.

2. Procédé selon la revendication 1, caractérisé en ce que la boue de chaux est délivrée dans le flux gazeux selon une teneur en matières solides sèches dépassant 75 %.

3. Procédé selon la revendication 1 ou 2, caractérisé en ce que 50 à 100 % de la boue de chaux délivrée dans le flux gazeux est séchée dans un sécheur pneumatique.

4. Procédé selon la revendication 1, 2 ou 3 caractérisé en ce que le flux gazeux réglable contient 30 à 100 % de gaz de combustion évacués du four de recuisson de la chaux.

5. Dispositif pour mettre en oeuvre le procédé tel que revendiqué dans l'une quelconque des revendications précédentes, caractérisé en ce qu'il comprend une chambre d'alimentation (2), ayant une section supérieure (11) divisée par une paroi de séparation (8) en deux canaux d'écoulement adjacents, sensiblement verticaux (9, 10) et connectés à une partie sensiblement verticale d'une conduite de séchage (3) qui débouche sur un cyclone (4), et avec la section inférieure (14) de ladite chambre d'alimentation enfermant une partie au moins des moyens d'alimentation (12, 13) disposée sur l'extrémité supérieure ou d'admission du four de recuisson de la chaux (5), un déflecteur de commande (15) disposé sur une partie supérieure de la paroi de séparation, une vis d'alimentation (1) ou des moyens d'alimentation équivalents pour doser de la boue de chaux dans l'un des canaux d'écoulement adjacent (9) de la chambre d'alimentation, et des moyens (16, 17) pour introduire de la boue de chaux séchée qui a été séparée dans le cyclone (4), dans la section inférieure de la chambre d'alimentation.

6. Dispositif selon la revendication 5, caractérisé en ce que les moyens d'alimentation (12, 13) sont constitués d'aubes (13) ayant des systèmes de godets ou des saillies en forme de pelle (12) et qui sont fixés sur l'extrémité supérieure ou d'admission du four de recuisson de la chaux, lesdites aubes, en tournant, transférant la boue de chaux dans le four de recuisson de la chaux.
